# EUROPÄISCHE PATENTANMELDUNG

(11) **EP 4 191 721 A1**
(43) Veröffentlichungstag der Anmeldung: **07.06.2023**
(21) Anmeldenummer: 21211564.6
(22) Anmeldetag: 01.12.2021
(51) Int. Cl.: H01M 10/052, H01M 10/44, H01M 10/60, H01M 10/623, H01M 50/213, H01M 50/247

(54) **AKKUMULATOR MIT VERBESSERTER KÜHLLEISTUNG, AKKUPACK UND WERKZEUGMASCHINE**

(71) Anmelder: Hilti Aktiengesellschaft, 9494 Schaan (LI)
(72) Erfinder: Hartmann, Markus, 87665 Mauerstetten (DE); Stanger, Robert, 87600 Kaufbeuren (DE); Landesfeind, Johannes, 82407 Wielenbach (DE)
(74) Vertreter: Hilti Aktiengesellschaft Corporate Intellectual Property

(57) **Zusammenfassung**

Die Erfindung betrifft einen Akkumulator (16) für eine Werkzeugmaschine (10), mit einem Zellkern (22). Sie ist gekennzeichnet, dadurch dass kein Punkt innerhalb des Zellkerns (22) mehr als 5 mm von einer Oberfläche (24) des Akkumulators (16) entfernt ist und der Akkumulator (16) aufweist. Des Weiteren betrifft die Erfindung einen Akkupack (12) sowie eine Werkzeugmaschine (10). Sie ermöglicht hohe Entladeströme. Hohe Leistungen können somit bereitgestellt werden.

## Beschreibung

Die Erfindung geht aus von einem Akkumulator für eine Werkzeugmaschine. Der Akkumulator weist einen Zellkern auf.

Vermehrt kommen Werkzeugmaschinen, beispielsweise elektrische Handwerkzeugmaschinen, zum Einsatz, die kabellos betreibbar sind. Dazu weisen die Werkzeugmaschinen einen Akkupack mit wenigstens einem Akkumulator auf. Um hohe Leistungen bereitstellen zu können, wird der Akkupack und insbesondere der wenigstens eine Akkumulator mit einem verhältnismäßig hohen Entladestrom entladen. Unter anderem durch Innenwiderstände in dem Akkumulator und / oder in dem Akkupack erwärmt sich der Akkupack während des Entladens aufgrund des elektrischen Stromflusses. Eine zu starke Erwärmung kann jedoch zu einer Zerstörung durch Überhitzung oder zu einem thermischen Durchgehen führen. Eine Kerntemperatur innerhalb des Zellkerns sollte daher stets bis höchstens zu einer Grenztemperatur ansteigen.

Ob oder wie schnell diese Grenztemperatur während des Entladens erreicht wird, bestimmt somit auch den maximal möglichen Entladestrom und damit auch die maximal entnehmbare Leistung mit.

Aufgabe der vorliegenden Erfindung ist es, einen Akkumulator, einen Akkupack sowie eine Werkzeugmaschine bereitzustellen, die besonders hohe Leistungen bereitstellen können.

Gelöst wird die Aufgabe durch einen **Akkumulator** für eine Werkzeugmaschine. Der Akkumulator weist einen Zellkern auf. Kein Punkt innerhalb des Zellkerns ist mehr als 5 mm von einer Oberfläche des Akkumulators entfernt. Somit befindet sich jeder Punkt innerhalb des Zellkerns verhältnismäßig dicht an der Oberfläche. Der Akkumulator weist eine Kapazität von wenigstens 2,2 Ah, bevorzugt wenigstens 2,5 Ah auf. Während eines Entladens im Zellkern entstehende Wärme des Akkumulators kann somit auf verhältnismäßig kurzem Wege bis zur Oberfläche transportiert werden. Von der Oberfläche kann die Wärme abgeführt werden. Somit kann ein solcher Akkumulator eine gute Kühlung, insbesondere eine vergleichsweise gute Selbstkühlung, aufweisen. Die Zeitdauer bis zum Erreichen der Grenztemperatur kann verlängert und / oder das Erreichen der Grenztemperatur gänzlich vermieden werden.

Innerhalb des Zellkerns kann eine verhältnismäßig homogene Temperaturverteilung erreicht werden. Hierdurch kann sich eine gleichmäßige Alterung des Akkumulators ergeben. Dies wiederum kann die Lebensdauer des Akkumulators erhöht.

Diese und weitere positive Effekte können besonders deutlich zutage treten, wenn der Akkumulator eine besonders große Kapazität aufweist. Dabei kann die Kapazität auch in Wh gemessen sein. Beispielsweise kann der Akkumulator eine Kapazität von wenigstens 20 Wh, insbesondere wenigstens 50 Wh, beispielsweise von wenigstens 200 Wh aufweisen.

Denkbar ist dabei, dass der Akkumulator Lithium aufweist. Beispielsweise kann es sich um einen Lithium-Ionen-Akkumulator handeln.

Ein besonders vorteilhafter Wärmeabfluss und damit eine hohe Kühlleistung können sich ergeben, wenn eine Schnittfläche des Akkumulators mindestens 40 cm², vorzugsweise wenigstens 50 cm², beträgt. Die Schnittfläche kann beispielsweise eine Längsschnittsfläche oder eine Querschnittsfläche sein. Bei einem zylindrischen Akkumulator kann die Schnittfläche einer Querschnittsfläche parallel zu einer Grundfläche eines vom Akkumulator einbeschriebenen Zylinders entsprechen. Bei einer rechteckigen Schnittfläche kann sie durch eine Länge und eine korrespondierende Breite aufgespannt sein. "Rechteckig" kann dazu auch eine im Wesentlichen rechteckige Form umfassen. Beispielsweise kann eine Form mit abgerundeten Ecken mitumfasst sein.

Die Kühlung des Akkumulators lässt sich weiter verbessern, wenn seine Oberfläche im Verhältnis zum Volumen verhältnismäßig groß ist. Unter einem verhältnismäßig großen Verhältnis kann beispielsweise verstanden werden, dass ein Verhältnis der Oberfläche des Akkumulators zu seinem Volumen wenigstens zehnmal größer als der Kehrwert der dritten Wurzel des Volumens ist.

Eine Klasse von Akkumulatoren kann dadurch gekennzeichnet sein, dass der Akkumulator, insbesondere der Zellkern, eine zylindrische Form aufweist. Die zylindrische Form kann als Grundfläche eine Ellipse und / oder ein Polygon aufweisen. Sie kann auch ein Prisma sein und / oder ein solches umfassen. "zylindrisch" kann dabei auch eine im Wesentlichen zylindrische Form umfassen. Beispielsweise kann die Form des Akkumulators abgesehen von Unebenheiten an Stirnseiten des Akkumulators, insbesondere abgesehen von Elektroden des Akkumulators, zylindrisch sein.

Denkbar ist auch, dass die Grundfläche ringförmig ausgebildet ist. Allgemein kann der Akkumulator, insbesondere der Zellkern, röhrenförmig ausgebildet sein. Der Akkumulator, insbesondere der Zellkern, kann somit einen hohlen Innenbereich aufweisen. Der hohle Innenbereich kann einen größten Durchmesser von wenigstens 3 mm aufweisen. Der Zellkern kann eine Wandstärke aufweisen. Die Wandstärke kann höchstens 14 mm, besonders bevorzugt höchstens 7 mm, beispielsweise höchstens 5 mm, betragen.

Die im Zellkern während eines Entladens des Akkumulators erzeugte Wärmeleistung kann quadratisch oder zumindest im Wesentlichen quadratisch mit der Stärke des Entladestroms ansteigen.

Ein Akkumulator, der durch die beschriebenen Maßnahmen eine besonders gute Kühlung aufweist, ist daher insbesondere dann vorteilhaft, wenn hohe Entladeströme zu erwarten sind.

Beispielsweise kann der Akkumulator eingerichtet sein, einen Entladestrom über wenigstens 10 s von wenigstens 20 A, insbesondere wenigstens 25 A, bereitzustellen. Mit anderen Worten kann der Akkumulator eingerichtet sein, einen Dauerstrom von wenigstens 20 A, insbesondere von wenigstens 25 A, bereitzustellen.

Gleichfalls ist es denkbar, dass Spitzenströme, insbesondere kurzzeitige Spitzenströme, zu einer starken Erwärmung des Akkumulators führen können. Daher ist ein Akkumulator mit einer leistungsstarken Kühlung, wie sie durch die vorliegend beschriebenen Maßnahmen erzielt werden kann, besonders vorteilhaft. Denkbar ist beispielsweise, dass der Akkumulator über 1 Sekunde hinweg wenigstens 50 A bereitstellen kann.

Werkzeugmaschinen können oftmals kurzzeitig hohe Leistungen benötigen. Ein Akkumulator, der einen derartigen Spitzenstrom und / oder einen derartigen Dauerstrom bereitzustellen vermag, kann daher besonders geeignet für solche Werkzeugmaschinen sein.

In den Rahmen der Erfindung fällt des Weiteren ein **Akkupack** für eine Werkzeugmaschine, umfassend wenigstens zwei Akkumulatoren. Die Akkumulatoren können ein oder mehrere der vorliegend beschriebenen Merkmale aufweisen.

Der Akkupack kann beispielsweise bis zu 25 Akkumulatoren aufweisen. Ein solcher Akkupack ist beispielsweise bei einer tragbaren Werkzeugmaschine, beispielsweise einer Handwerkzeugmaschine, denkbar.

Der Akkupack kann auch bis zu 100 Akkumulatoren aufweisen. Ein Akkupack mit mehr als 50 Akkumulatoren kann beispielsweise zur Verwendung bei einer mobilen Werkzeugmaschine, beispielsweise einem Bauroboter, eingerichtet sein.

Auch fällt in den Rahmen der Erfindung eine **Werkzeugmaschine,** umfassend wenigstens ein Akkupack mit den vorliegend beschriebenen Eigenschaften und / oder wenigstens einen Akkumulator mit den vorliegend beschriebenen Eigenschaften.

Die Werkzeugmaschine kann zum Einsatz auf einer Baustelle, beispielsweise einer Hochbau-Baustelle und / oder einer Tiefbau-Baustelle eingerichtet sein. Sie kann zum Bohren, Trennen, beispielsweise Meißeln, Sägen oder Schneiden, Pressen und / oder Schleifen ausgebildet sein. Dementsprechend kann die Werkzeugmaschine eingerichtet sein, ein Werkzeug, beispielsweise ein Bohrwerkzeug, ein Trennwerkzeug, beispielsweise ein Meißelwerkzeug, ein Sägeblatt oder ein Messer, ein Presswerkzeug oder ein Schleifwerkzeug, beispielsweise eine Schleifscheibe, aufzunehmen.

Denkbar ist alternativ oder ergänzend, dass die Werkzeugmaschine zum Saugen, Blasen und / oder Messen eingerichtet ist. Dementsprechend kann sie zur Aufnahme eines Werkzeugs in Form eines Saug- und / oder eines Blaswerkzeugs, beispielsweise ein Saug- und / oder Blasrohr, und / oder eines Messwerkzeugs eingerichtet sein.

Die Werkzeugmaschine kann eine mobile Werkzeugmaschine sein.

Als mobile Werkzeugmaschine kann die Werkzeugmaschine tragbar sein. Sie kann dazu ein Gewicht von höchstens 43 kg, besonders bevorzugt von höchstens 25 kg, insbesondere von höchstens 10 kg, beispielsweise höchstens 5 kg, aufweisen. Die Werkzeugmaschine kann beispielsweise eine elektrische Handwerkzeugmaschine sein.

Dabei kann "mobil" auch umfassen, dass die Werkzeugmaschine eingerichtet ist, temporär, beispielsweise zur Ausführung einer Bauarbeit, an eine Oberfläche fixiert zu sein. Somit können beispielsweise auch ständergeführte Handwerkzeugmaschinen mitumfasst sein.

Alternativ oder ergänzend zur Tragbarkeit kann die Werkzeugmaschine eine mobile Plattform aufweisen. Die mobile Plattform kann ein Fahrwerk, beispielsweise ein Kettenfahrwerk und / oder ein Räderfahrwerk, aufweisen.

Insbesondere kann die Werkzeugmaschine auch als Bauroboter ausgebildet sein. Dazu kann sie einen Manipulator aufweisen. Am Manipulator kann ein Endeffektor angeordnet und / oder ausgebildet sein. Der Endeffektor kann eingerichtet sein, mittelbar und / oder unmittelbar das Werkzeug aufzunehmen. Beispielsweise kann die Werkzeugmaschine als Bohrbauroboter, als Meißelbauroboter und / oder als Schleifbauroboter ausgebildet sein.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Figur 1: eine Werkzeugmaschine;
- Figur 2: einen Längsschnitt durch einen Akkumulator;
- Figur 3: einen Querschnitt durch einen weiteren Akkumulator;
- Figur 4: einen Querschnitt durch einen weiteren Akkumulator;
- Figur 5: einen Querschnitt durch einen weiteren Akkumulator; und
- Figur 6: einen Akkupack.

In der nachfolgenden Beschreibung der Figuren werden zur Erleichterung des Verständnisses der Erfindung für gleiche oder sich funktional entsprechende Elemente jeweils die gleichen Bezugszeichen verwendet.

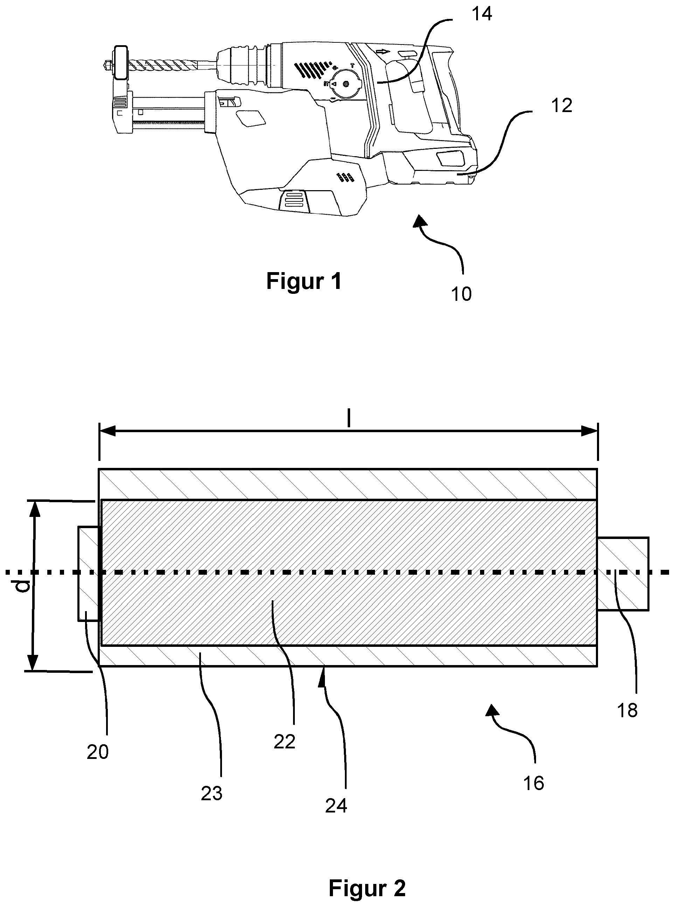

**Figur 1** zeigt eine Werkzeugmaschine **10.** Die Werkzeugmaschine 10 ist als mobile Werkzeugmaschine ausgebildet. Die Werkzeugmaschine 10 ist beispielsweise eine elektropneumatische Hammerbohrmaschine. Die Werkzeugmaschine 10 ist kabellos betreibbar. Dazu weist sie einen Akkupack **12** auf. Der Akkupack 12 ist abnehmbar an einem Gehäuse **14** der Werkzeugmaschine 10 angeordnet. Er lässt sich somit, beispielsweise zum Laden, von der Werkzeugmaschine 10 abnehmen. Anschließend kann er wieder an der Werkzeugmaschine 10 angeordnet werden, sodass mit der Werkzeugmaschine 10 weitergearbeitet werden kann.

**Figur 2** zeigt einen Akkumulator **16** in einer Längsschnittdarstellung. Der Akkumulator 16 weist eine Länge **I** und einen Durchmesser, insbesondere einen größten Durchmesser **d,** auf. Der Akkumulator 16 weist eine zylindrische Form auf. An seinen beiden Kopfenden sind Elektroden **18, 20** ausgebildet. Über die Elektroden 18, 20 kann der Akkumulator 16 aufgeladen und / oder entladen werden.

Der Akkumulator 16 kann eine lang gestreckte Form aufweisen. Seine Länge kann dazu beispielsweise wenigstens 5mal, beispielsweise wenigstens 10mal, so lang sein wie der Durchmesser d.

Die Länge I des Akkumulators beträgt 0,4 m. Sein Durchmesser d beträgt beispielsweise 1 cm. Die Länge I kann beispielsweise wenigstens 10 cm betragen.

Bei diesem Akkumulator 16 beträgt somit ein Verhältnis der Oberfläche des Akkumulators 16 zu seinem Volumen mehr als zehnmal dem Kehrwert der dritten Wurzel des Volumens, insbesondere beträgt das Verhältnis ca. 13.

Der Akkumulator 16 weist ferner einen Zellkern **22** auf. Der Zellkern 22 ist von einem Gehäuse **23** umgeben.

Durch die zylindrische Form des Akkumulators 16 in Verbindung mit seinem verhältnismäßig kleinen Durchmesser d befindet sich kein Punkt im Inneren des Akkumulators 16, insbesondere im Zellkern 22 des Akkumulators 16, mehr als 5 mm von einer Oberfläche **24** des Akkumulators entfernt. Alternativ ist denkbar, dass der Akkumulator 16 eine nichtzylindrische Form aufweist. Beispielsweise können er und / oder der Zellkern 22 quaderförmig oder zumindest im Wesentlichen quaderförmig sein. "Im Wesentlichen" kann dabei einen Randbereich des Akkumulators 16 bzw. des Zellkerns 22 ausnehmen.

Insbesondere können der Akkumulator 16 und / oder der Zellkern 22 plattenförmig sein.

Der Akkumulator 16 ist ein Lithiumionen-Akkumulator. Insbesondere weist dazu der Zellkern 22 Lithium auf.

Er weist eine Kapazität von wenigstens 2,5 Ah auf.

Denkbar ist auch, dass die Länge **I** mehr als 40 cm, beispielsweise 0,5 m, beträgt. Bei einem Durchmesser d von 1 cm ergibt sich somit eine Längsschnittfläche des Akkumulators 16 von wenigstens 40 cm².

Weitere Ausführungsbeispiele von Akkumulatoren 16 werden nachfolgend beschrieben. Diese weiteren Ausführungsbeispiele können soweit nicht anders beschrieben ein oder mehrere Merkmale der anderen Akkumulatoren 16, insbesondere des vorangehend beschriebenen Ausführungsbeispiels, aufweisen.

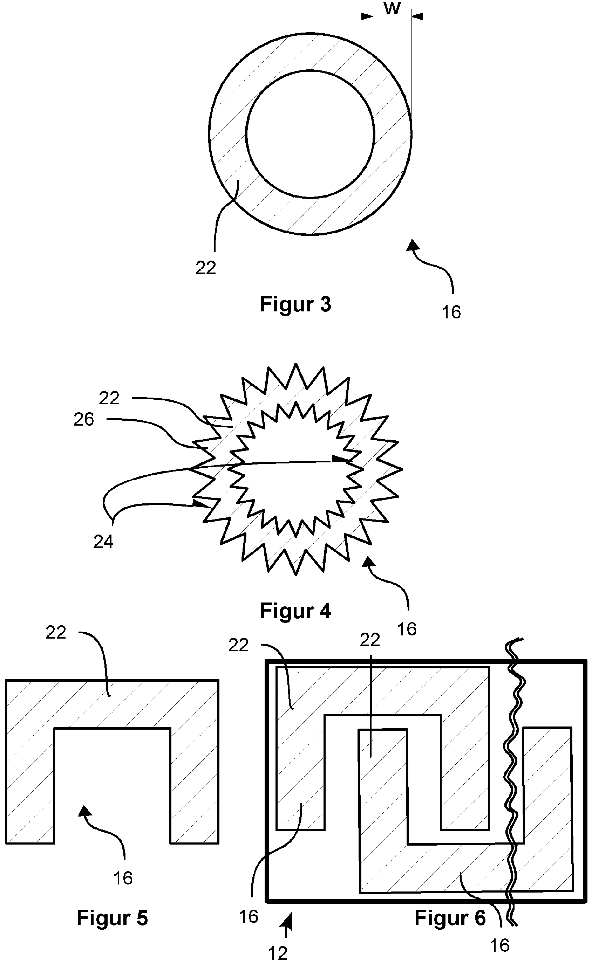

Einen weiteren Akkumulator 16 zeigt **Figur 3** in einer Querschnittsdarstellung. In der Querschnittsdarstellung gemäß Figur 3 ist erkennbar, dass der Akkumulator bei dieser Ausführungsform einen ringförmigen Querschnitt aufweist. Seine Wandstärke w beträgt höchstens 1 cm, somit ist wiederum kein Punkt innerhalb des Zellkerns 22 mehr als 5 mm von einer Oberfläche des Akkumulators 16 entfernt.

Einen weiteren Akkumulator 16 zeigt **Figur 4** ebenfalls in einer Querschnittdarstellung.

Der Akkumulator 16 weist wiederum einen röhrenförmigen Querschnitt auf. Bei diesem Ausführungsbeispiel sind im Querschnitt ein oder mehr Zacken **26** ausgebildet. In Figur 4 ist beispielhaft eine Zacke 26 mit einem Bezugszeichen versehen. Durch die Zacken 26 kann die Oberfläche 24 im Verhältnis zum durch den Akkumulator 16 beanspruchten Raum gegenüber einem röhrenförmigen Querschnitt ohne Zacken 26 vergrößert werden.

Ist der Zellkern 22 aus einem elastisch und / oder plastisch verformbaren Material und / oder einer elastisch und / oder plastisch verformbaren Materialkomposition ausgebildet, so lässt sich der Akkumulator 16 gemäß diesem Ausführungsbeispiel durch regelmäßige Faltung, insbesondere entsprechend der Anzahl der Zacken, des flexiblen Materials bzw. der flexiblen Materialkomposition erreichen.

Dabei kann ein blattförmiges Material als Ausgangsmaterial bzw. eine blattförmige Materialkomposition als Ausgangsmaterialkomposition verwendet werden.

Alternativ oder ergänzend ist denkbar, dass an der Oberfläche 24 wenigstens eine Kühlrippe angeordnet ist.

**Figur 5** zeigt eine weiteres Ausführungsbeispiel eines Akkumulators 16.

Dieser Akkumulator 16 weist einen U-förmigen oder zumindest im Wesentlichen U-förmigen Querschnitt auf. Auch dieser Querschnitt kann durch geeignete Faltung eines blattförmigen Materials bzw. einer blattförmigen Materialkomposition erzeugt werden. Die Wandstärke w dieses Akkumulators 16 beträgt wiederum höchstens 1 cm. Somit ist wiederum jeder Punkt des Zellkerns 22 höchstens 5 mm von einer Oberfläche des Akkumulators 16 entfernt.

**Figur 6** zeigt einen Akkupack 12. Der Akkupack 12 weist eine Vielzahl Akkumulatoren 16, beispielsweise 20, 25, oder 90, auf.

Aus Vereinfachungsgründen zeigt Figur 6 lediglich zwei Akkumulatoren 16. Beispielhaft entsprechen die Akkumulatoren 16 dem Ausführungsbeispiel gemäß Figur 5. Sie können jedoch alternativ oder ergänzend eine andere Ausgestaltung aufweisen, insbesondere können sie einem der Ausführungsbeispiele gemäß Figuren 1 bis 4 entsprechen.

Die Akkumulatoren 16 sind innerhalb des Akkupacks 12 raumsparend angeordnet. Beispielhaft sind in Figur 4 zwei Akkumulatoren 16 dazu ineinandergreifend angeordnet, dass

Zwischen ihnen können jeweils Zwischenräume verbleiben. Die Zwischenräume können eingerichtet sein, eine Wärmeabfuhr, insbesondere von Oberflächen der Akkumulatoren 16, zu verbessern.

### Bezugszeichenliste

- 10: Werkzeugmaschine
- 12: Akkupack
- 14: Gehäuse
- 16: Akkumulator
- 18: Elektrode
- 20: Elektrode
- 22: Zellkern
- 23: Gehäuse
- 24: Oberfläche
- 26: Zacken
- d: Durchmesser
- I: Länge
- w: Wandstärke

## Patentansprüche

1. **Akkumulator** (16) für eine Werkzeugmaschine (10), mit einem Zellkern (22), wobei kein Punkt innerhalb des Zellkerns (22) mehr als 5 mm von einer Oberfläche (24) des Akkumulators (16) entfernt ist und der Akkumulator (16) eine Kapazität von wenigstens 2,2 Ah, bevorzugt wenigstens 2,5 Ah aufweist.

2. Akkumulator nach dem vorhergehenden Anspruch, **dadurch gekennzeichnet, dass** der Akkumulator (16) Lithium aufweist.

3. Akkumulator nach einem der vorhergehenden Ansprüche, **dadurch gekennzeichnet, dass** eine Schnittfläche des Akkumulators (16) wenigstens 20 cm², vorzugsweise wenigstens 40 cm², beträgt.

4. Akkumulator nach einem der vorhergehenden Ansprüche, **dadurch gekennzeichnet, dass** ein Verhältnis der Oberfläche (24) des Akkumulators (16) zu seinem Volumen wenigstens zehnmal größer als der Kehrwert der dritten Wurzel des Volumens ist.

5. Akkumulator nach einem der vorhergehenden Ansprüche, **dadurch gekennzeichnet, dass** der Akkumulator (16), insbesondere der Zellkern (22), eine zylindrische Form aufweist.

6. Akkumulator nach einem der vorhergehenden Ansprüche, **dadurch gekennzeichnet, dass** der Akkumulator (16) eingerichtet ist, einen Entladestrom über wenigstens 10 s von wenigstens 20 A bereitzustellen.

7. Akkumulator nach einem der vorhergehenden Ansprüche, **dadurch gekennzeichnet, dass** der Akkumulator (16) über wenigstens 1 s wenigstens 50 A bereitstellen kann.

8. **Akkupack (12)** für eine Werkzeugmaschine (10), umfassend wenigstens zwei Akkumulatoren (16) nach einem der vorhergehenden Ansprüche.

9. **Werkzeugmaschine (10),** umfassend wenigstens einen Akkumulator (16) nach einem der Ansprüche 1 bis 7 und / oder wenigstens einen Akkupack (12) nach Anspruch 8.
